# EUROPEAN PATENT APPLICATION

(11) **EP 2 112 596 A2**
(43) Date of publication of application: **28.10.2009**
(21) Application number: 09158277.5
(22) Date of filing: 20.04.2009
(51) Int. Cl.: G06F 9/48

(54) **System and method for application and environment portability**

(30) Priority: 22.04.2008 US 148767
(71) Applicant: HEWLETT-PACKARD DEVELOPMENT COMPANY, L.P., Houston, TX 77070 (US)
(72) Inventor: Bess, Charles E., Plano, TX 75024 (US)
(74) Representative: Franks, Adam Peter

(57) **Abstract**

A data processing system having a processor and accessible memory, the data processing system executing a first operating system, the data processing system also having an application and virtualized application environment, the application and virtualized application environment capable of being packaged and moved to a second data processing system. There is also a machine-usable medium encoded with a container, the container storing a packaged data processing system application and associated virtualized application environment, the virtualized application environment capable of being executed on a plurality of different operating systems. There is also a method, including executing an application in a virtualized application environment on a first device and packaging the virtualized application environment and the application in a container. The method also includes unpacking the container on a second device and executing the application in the virtualized application environment on the second device.

## Description

### TECHNICAL FIELD

The present disclosure is directed, in general, to portability of data processing system applications.

### BACKGROUND OF THE DISCLOSURE

The use of data processing system applications on different devices is typically limited to devices with identically installed operating systems and applications. A user must typically save a data file in an application on the first device, then transfer the data file to another device with the same application and operating system. The user can typically only continue to use the data file on a similarly-configured second device.

### SUMMARY OF THE DISCLOSURE

On disclosed environment includes a data processing system comprising a processor and accessible memory, the data processing system executing a first operating system, the data processing system also having an application and virtualized application environment, the application and virtualized application environment capable of being packaged and moved to a second data processing system.

Another disclosed embodiment includes a machine-usable medium encoded with a container, the container storing a packaged data processing system application and associated virtualized application environment, the virtualized application environment capable of being executed on a plurality of different operating systems.

Another disclosed embodiment includes a method, comprising executing an application in a virtualized application environment on a first device and packaging the virtualized application environment and the application in a container. The method also includes unpacking the container on a second device and executing the application in the virtualized application environment on the second device.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:

Figure 1 depicts a block diagram of a data processing system in which an embodiment can be implemented as one of several devices on which an application virtualization is executed;

Figure 2 depicts a simplified diagram of moving an application and its application environment from a first device to a second device, in accordance with a disclosed embodiment; and

Figure 3 illustrates an application within a virtualized application environment, in accordance with a disclosed embodiment.

### DETAILED DESCRIPTION

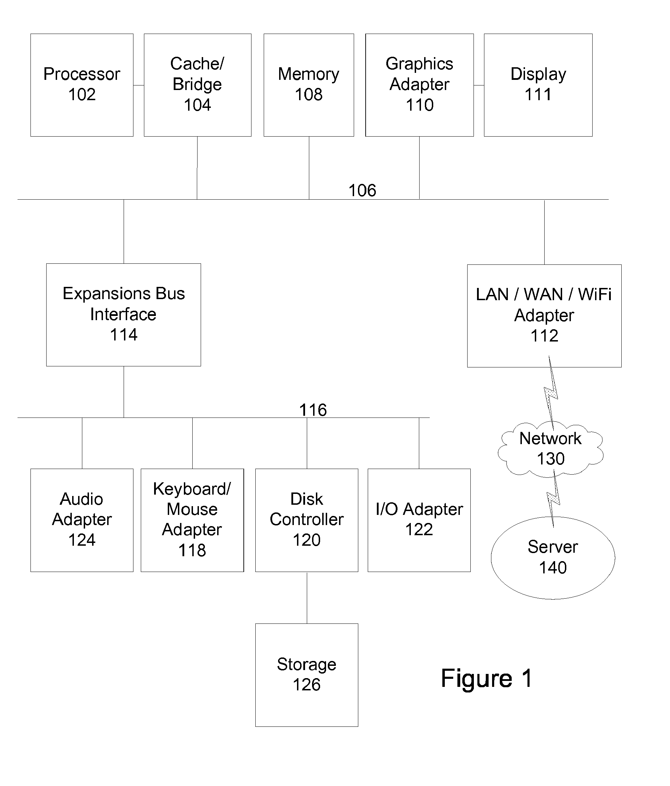

FIGURES 1 through 3, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Figure 1 depicts a block diagram of a data processing system in which an embodiment can be implemented as one of several devices on which an application virtualization is executed. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, etc.

Those of ordinary skill in the art will appreciate that the hardware depicted in Figure 1 may vary for particular. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows^{™}, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

Operating flexibility is currently addressed via virtualization. It takes place currently at the operating system level (e.g. the VMware^{®} virtualization software by VMware, Inc.) at the application level (e.g., The Microsoft SoftGrid^{®} Application Virtualization platform by Microsoft Corporation) and at the user interface level (e.g,, products by Citrix Systems, Inc.). In all of these techniques the actual processing remains within the same platform.

Business users tend to use many platforms during the day based on their context. The application environment, when needed, should be able to support the user with the capabilities available.

Another related solution is emulation or virtual machines (e.g., the JVM^{®} virtual machine by Sun Microsystems). Emulation techniques attempt to mimic the behavior of a computer or operating environment. They also typically do not support the movement of an application environment (including state) between platforms.

The current approach to application virtualization is limited to taking place within an application instance. A user is tethered to an operating system instance. When the users needs to change working locations, he is forced to find a point where he can save his state and cannot work anymore until he gets to another machine that has the necessary software and access to where the state information is stored. The day is divided into periodic disruptions based on where the user is working and what capabilities are available.

According to disclosed embodiments, the application is transportable to whatever device the user needs it on at the time. If the user's situation changes (e.g., the user needs to leave work and head home), the user can take that application with him in its current state. The application can use whatever capabilities its interim state may provide.

Disclosed embodiments provide a continuously-available experience for users by enabling the movement of the software experience (application) from one platform (e.g., work desktop) to another (e.g., Personal Data Device) to another (e.g., home desktop). This is completed, in various embodiments, by encapsulating the application within a virtualized environment that can be moved between devices and connected to the native operating system.

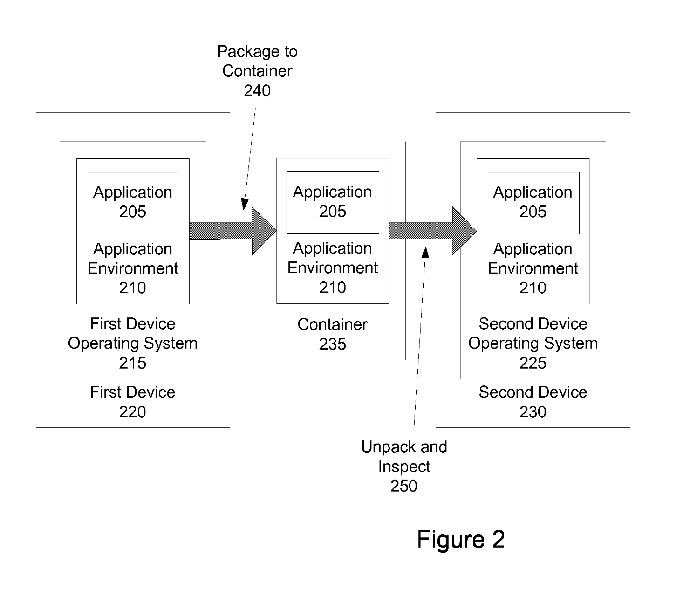

According to disclosed embodiments, the application is "housed" within its own virtual environment that has a clear interface with the outlying operating system, as illustrated in Figure 2, described below. This interface is supported on all the platforms where the application can be transported. When a migration to a new platform is required, the application's environment is packaged, including any state information, transported to the new system, opened and then plugged in using the supported interface. Most of this work could be done separate from state transition, reducing the time to move the application between devices.

Figure 2 depicts a simplified diagram of moving an application 205 and its application environment 210 from a first device 220 to a second device 230. First device 220 and second device 230 can be any suitable device having at least a processor and accessible memory in order to perform as described herein, including a data processing system such as depicted in Figure 1, a mobile device, a portable or laptop data processing system, or other such devices as known to those of skill in the art. Similarly, the first device operating system 215 and second device operating system 225 can be any operating system suitable for the respective device, such as a Microsoft Windows® operating system, a LINUX or UNIX operating system, a Palm® operating system, or otherwise. The first device operating system 215 and second device operating system 225 can be the same or different in various implementations.

As illustrated in Figure 2, application 205 operates within its application environment 210, within first device operating system 215 on first device 220.

When the user is ready to move from first device 220, both the application 205 and the application environment 210 are packaged in container 235, at shown as packaging step 240. Container 235 can be transported in any known manner, such as by electronic mail or file transfer, by electronic storage such as in a machine-unable medium as described below, or otherwise.

The container 235 is unpackaged on second device 230, shown as unpacking and inspecting step 250. Application 205 and application environment 210 are restored. Application 205 operates within its application environment 210, within second device operating system 225 on first device 230.

In some embodiments, after the application 205 and application environment 210 are unpacked, but before they are executed on second device 230, the capabilities of the second device are validated against the acceptable environment requirements of the program, as part of the unpacking and inspecting process, either as an integrated process or as two separate steps. The software process that manages the unpacking can also examine the environment requirements of the packaged application and application environment, examine or introspect the second device to validate that its capabilities match the requirements. This can be performed before the application 205 and application environment 210 are executed on second device 230 to ensure a successful execution. In some embodiments, an executable software program that performs the unpacking and inspecting is packaged as part of the container 235.

In some implementations, application environment 210 is virtualized on the second device operating system 225 and second device 230 if it cannot execute natively. In some implementations, the application environment 210 is virtualized in both the first device operating system 215 and the second device operating system 225, and so can be easily ported since it is not natively part of either operating system.

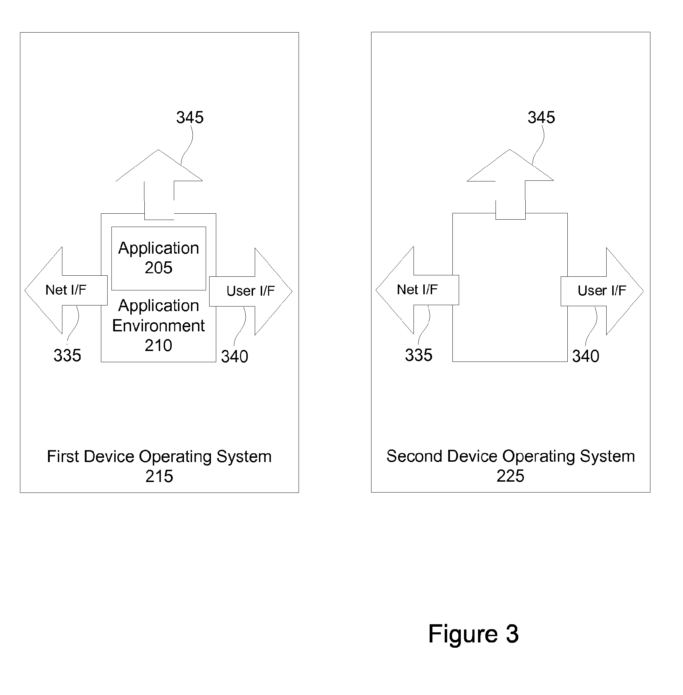

Figure 3 illustrates application 205 within virtualized application environment 210. Standardized application interfaces are defined between the native operating system and the application environment. These standard interfaces are implemented in the native operating system, enabling access to the systems capabilities. The network services interface 335 and user interface 340, and one or more additional interfaces 345, are provided over the interface. These interfaces are used for application 205 and virtualized application environment 210 to interface with the first device operating system 215, and similar interfaces are provided for second device operating system 225, for use when the application 205 and virtualized application environment 210 are moved to the second device operating system 225. to be unpacked in the box shown as empty in this figure.

Any application-specific local data storage can be housed within the virtualized application environment 210 (not shown). This provides a work environment that supports continuously changing location needs of the user.

When the application package arrives at the new system, where it will be run, a negotiation takes place to determine if the available features are sufficient for the application to operate. If those features are sufficient, the application is unpackaged and connected into the system, and the application will resume execution.

If sufficient capabilities are not available, a warning message is sent to the user that the application could not be unpackaged.

Virtualization in accordance with the disclosed embodiments allows a user to move the work to the new platform, providing seamless access to the application solution.

The disclosed techniques improve on known methods in many ways, including that they allow for greater flexibility and responsiveness to the changing situation of the user, and are platform-independent.

The disclosed techniques improving the ability of user to perform their functions using computers wherever and whenever they need them.

The disclosed techniques differ from operating system (OS) virtualization in that the focus is on the movement of the application, not the operating system. OS virtualization has no concept of allowing the application to plug into available capabilities that are special to the platform. OS virtualization does not support the packaging and movement to new platforms.

The disclosed techniques also differ from application virtualization, in that the focus is on the movement of the application including its operating state. In typical application virtualization, there is no concept of plugging into available capabilities that are special to the platform (e.g., GPS, touch screen). Further, virtualized application techniques do not support the packaging and movement to new platforms.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of a instructions contained within a machine usable medium in any of a variety of forms, and that the present disclosure applies equally regardless of the particular type of instruction or signal bearing medium utilized to actually carry out the distribution. Examples of machine usable or machine readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke paragraph six of 35 USC § 112 unless the exact words "means for" are followed by a participle.

## Claims

1. A data processing system comprising a processor and accessible memory, the data processing system executing a first operating system, the data processing system also having an application and virtualized application environment, the application and virtualized application environment capable of being packaged and moved to a second data processing system.

2. The data processing system of claim 1, further comprising a plurality of standardized interfaces between the virtualized application environment and the first operating system.

3. The data processing system of claim 1 or 2, further comprising a standardized user interface between the virtualized application environment and the first operating system.

4. The data processing system of claim 1, 2, or 3, further comprising a standardized network interface between the virtualized application environment and the first operating system.

5. The data processing system of claim 1, 2, 3, or 4, further comprising a local application storage in the virtualized application environment.

6. A machine-usable medium encoded with a container, the container storing a packaged data processing system application and associated virtualized application environment, the virtualized application environment capable of being executed on a plurality of different operating systems.

7. The machine-useable medium of claim 6, the virtualized application environment configured to communicate with a plurality of standardized interfaces of each of the plurality of different operating systems.

8. The machine-useable medium of claim 6 or 7, the container further encoded with an executable software program configured to unpack the container on a target device.

9. The machine-useable medium of claim 6, 7, or 8, the container further encoded with an executable software program configured to inspect a target device to determine if the virtualized application environment can be executed on the target device.

10. A method, comprising:
executing an application in a virtualized application environment on a first device; packaging the virtualized application environment and the application in a container;
unpacking the container on a second device;
executing the application in the virtualized application environment on the second device.

11. The method of claim 10, further comprising communicating between the virtual application environment and a first operating system on the first device using a plurality of standardized interfaces.

12. The method of claim 10 or 11, further comprising communicating between the virtual application environment and a second operating system on the second device using a plurality of standardized interfaces.

13. The method of claim 10, 11, or 12, further comprising inspecting the second device to determine if it meets execution requirements of the virtualized environment.
